# EUROPEAN PATENT APPLICATION

(11) **EP 3 879 203 A1**
(43) Date of publication of application: **15.09.2021**
(21) Application number: 19882325.4
(22) Date of filing: 05.11.2019
(51) Int. Cl.: F25B 1/02, C09K 5/04, C10M 101/02, C10M 105/06, C10M 105/32, C10M 107/24, C10M 107/34, F04B 39/00, F04B 39/02, F25B 1/00, C10N 30/00, C10N 30/02, C10N 40/30

(54) **REFRIGERANT COMPRESSOR AND EQUIPMENT USING SAME**

(30) Priority: 08.11.2018 JP 2018210881; 19.04.2019 JP 2019080054
(71) Applicant: Panasonic Corporation, Kadoma-shi Osaka 571-8501 (JP); Panasonic Appliances Refrigeration Devices Singapore, Singapore 469267 (SG)
(72) Inventor: KOBAYASHI, Masanori, Osaka 540-6207 (JP); ISHIDA, Yoshinori, Osaka 540-6207 (JP)
(74) Representative: Eisenführ Speiser
(86) International application number: PCT/JP2019/043315
(87) International publication number: WO 2020/095905

(57) **Abstract**

A refrigerant compressor includes: a sealed container in which refrigerating machine oil is stored; an electric element accommodated in the sealed container and driven by electric power supplied from outside; and a compression element accommodated in the sealed container and covered with the refrigerating machine oil, the compression element being driven by the electric element to compress refrigerant gas supplied from outside. The refrigerating machine oil contains an oil film shortage adjusting agent in a dissolved state in such a concentration that deposition of the oil film shortage adjusting agent does not occur at least while the refrigerant compressor is operating.

## Description

### Technical Field

The present invention relates to a refrigerant compressor for use in, for example, an air conditioner, a refrigeration apparatus, a washing and drying machine, and a water heater, and also to equipment using the refrigerant compressor.

### Background Art

In recent years, from the viewpoint of global environment conservation, the development of a high-efficient refrigerant compressor has been conducted for the purpose of reducing the use of fossil fuels. For example, as disclosed in Patent Literature 1, a refrigerant compressor has been developed, in which the outer peripheral portion of a piston of the refrigerant compressor is provided with annular oil feeding grooves, and thereby refrigerant leakage loss from a compression chamber is reduced.

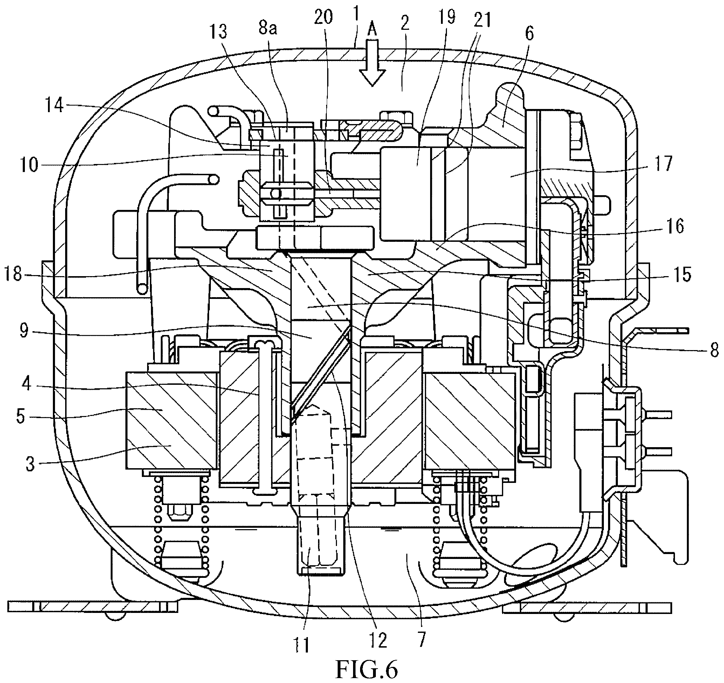

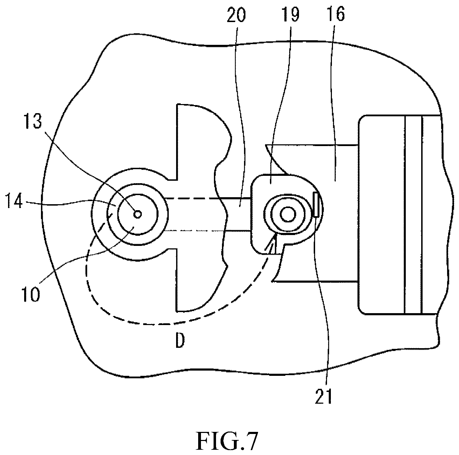

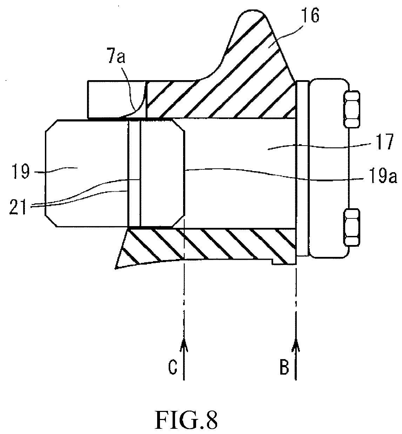

FIG. 6 is a schematic sectional view of a conventional refrigerant compressor disclosed in Patent Literature 1. FIG. 7 is a front view of a part of the refrigerant compressor of FIG. 6 as viewed in the direction of an arrow A of FIG. 6. FIG. 8 is a sectional view of a piston of the refrigerant compressor of FIG. 6, the sectional view showing the piston together with essential components disposed in the vicinity of the piston.

As shown in FIGS. 6 to 8, for example, the refrigerant compressor includes a sealed container 1, in which a compression element 6 and an electric element 5 are accommodated. The compression element 6 includes a crankshaft 8, a piston 19, and a cylinder block 15. The crankshaft 8 includes a main shaft 9 and an eccentric shaft 10, each of which extends vertically. The crankshaft 8 is pivotally supported by a pivotal support 18. The piston 19 is connected to the eccentric shaft 10. A cylinder 16 is formed inside the cylinder block 15. In the cylinder 16, a cylindrical compression chamber 17 is formed, in which the piston 19 is inserted. The electric element 5 includes a rotor 4 and a stator 3. The main shaft 9 is fixed to the rotor 4 by press-fitting, and the rotor 4 includes a permanent magnet (not shown) therein. The stator 3 includes a winding. Refrigerating machine oil 7 is stored in the bottom of the sealed container 1.

The crankshaft 8 is provided with an oil feeding structure 8a. The oil feeding structure 8a includes a tilted pump 11, a viscous pump 12, a vertical hole 13, and a horizontal hole 14. The tilted pump 11 is formed by a passage whose one end is open in the refrigerating machine oil 7. The passage extends vertically in the main shaft 9, and is tilted. The viscous pump 12 is formed by a circumferential groove. The circumferential groove is formed in the outer surface of the main shaft 9, and is connected to the other end of the tilted pump 11. The vertical hole 13 and the horizontal hole 14 are formed in the eccentric shaft 10. At the upper part of the crankshaft 8, the vertical hole 13 and the horizontal hole 14 are open toward an interior space 2 of the sealed container 1.

The piston 19 is coupled to the eccentric shaft 10 by a coupling member 20, and is inserted in the cylinder 16 in such a manner that the piston 19 can make sliding motion in a reciprocating manner. Two annular oil feeding grooves 21 are formed in the outer peripheral portion of the piston 19 over the entire circumference of the piston 19. When the piston 19 is at the top dead center (the top dead center is, for example, a position indicated by an arrow B in FIG. 8, i.e., a position where an upper end surface 19a of the piston 19 on the opposite side of the piston 19 from the eccentric shaft 10, and one end of the cylinder block 15 on the opposite side of the cylinder block 15 from the eccentric shaft 10, coincide in position with each other as seen in the radial direction of the cylinder 16), the oil feeding grooves 21 coincide in position with the inner peripheral surface of the cylinder block 15 as seen in the radial direction of the cylinder block 15. When the piston 19 is at the bottom dead center (the bottom dead center is, for example, a position indicated by an arrow C in FIG. 8, i.e., a position where the upper end surface 19a of the piston 19 and a non-end portion of the cylinder block 15 in the longitudinal direction coincide in position with each other as seen in the radial direction of the cylinder block 15), the oil feeding grooves 21 communicate with the interior space 2.

During the refrigerant compressor being driven, the crankshaft 8 is rotated together with the rotor 4 of the electric element 5 by electric power supplied from the outside. Eccentric motion of the eccentric shaft 10 is transmitted to the piston 19 via the coupling member 20, and as a result, the piston 19 makes reciprocating motion between the top dead center and the bottom dead center in the compression chamber 17. The piston 19 compresses, in the compression chamber 17, refrigerant gas that is supplied into the sealed container 1 from an external cooling system (not shown). This compression operation is repeated, and thereby the refrigerant is sequentially fed from the refrigerant compressor to the cooling system.

The refrigerating machine oil 7 in the sealed container 1 is pumped upward by the tilted pump 11 due to centrifugal force caused by the rotation of the crankshaft 8, and is fed to sliding portions via the viscous pump 12. The refrigerating machine oil 7 is scattered to the interior space 2 via the vertical hole 13 and the horizontal hole 14. As shown in FIGS. 7 and 8, at the time, the refrigerating machine oil 7 from the vertical hole 13 and the horizontal hole 14 is scattered toward the piston 19 particularly along a pre-formed discharge passage D. The refrigerating machine oil 7 adheres to the peripheral surface of the piston 19 and an end surface of the cylinder block 15 on the eccentric shaft 10 side, and accordingly, an oil sump 7a is formed due to, for example, surface tension. The oil sump 7a is formed over the entire circumference of the annular oil feeding grooves 21. The refrigerating machine oil 7 of the oil sump 7a, which is accumulated in the oil feeding grooves 21, forms an oil film between the piston 19 and the cylinder 16, and thereby sealing performance for sealing the gap between the piston 19 and the cylinder 16 (which may hereinafter be simply referred to as "sealing performance") is ensured, which reduces refrigerant leakage loss.

### Citation List

### Patent Literature

PTL 1: Japanese Laid-Open Patent Application Publication No. 2003-65236

### Summary of Invention

### Technical Problem

In recent years, there is a demand for a refrigerant compressor with further improved efficiency. For example, lowering the viscosity of the refrigerating machine oil, and also, lowering the operation speed of the refrigerant compressor by utilizing, for example, inverter driving, are desired. However, lowering the refrigerating machine oil viscosity, and lowering the refrigerant compressor operation speed by utilizing inverter driving or the like, may cause a problem in that the formation of the oil film becomes difficult and a problem in that, for example, edges of the oil feeding grooves cause breakage of the oil film, and thus maintaining the oil film becomes difficult (hereinafter, these problems may be simply referred to as "oil film shortage"). If the oil film shortage occurs, it may cause reduction in the cooling performance and the efficiency of the refrigerant compressor.

In view of the above, an object of the present invention is to provide a refrigerant compressor that makes it possible to prevent reduction in refrigeration capacity and efficiency by preventing reduction in sealing performance due to oil film shortage between a piston and a cylinder even when the refrigerant compressor performs low-speed operation while using low-viscosity refrigerating machine oil, and to provide equipment in which the refrigerant compressor is used.

### Solution to Problem

In order to solve the above-described problems, a refrigerant compressor according to one aspect of the present invention includes: a sealed container in which refrigerating machine oil is stored; an electric element accommodated in the sealed container and driven by electric power supplied from outside; and a compression element accommodated in the sealed container and covered with the refrigerating machine oil, the compression element being driven by the electric element to compress refrigerant gas supplied from outside. The refrigerating machine oil contains an oil film shortage adjusting agent in a dissolved state in such a concentration that deposition of the oil film shortage adjusting agent does not occur at least while the refrigerant compressor is operating.

According to the above configuration, since the refrigerating machine oil stored in the sealed container contains the oil film shortage adjusting agent in a dissolved state, an oil film formed by the refrigerating machine oil can be readily maintained on the surface of the compression element. Accordingly, even in a case where the refrigerant compressor performs low-speed operation while using the low-viscosity refrigerating machine oil, the oil film can be stably formed and maintained, for example, at a sliding gap between a piston and a cylinder in the compression element.

The refrigerating machine oil contains the oil film shortage adjusting agent in a dissolved state in such a concentration that deposition of the oil film shortage adjusting agent does not occur at least while the refrigerant compressor is operating. Therefore, for example, no damage to the sliding surfaces between the piston and the cylinder will be caused by a deposit of the oil film shortage adjusting agent. This makes it possible to prevent reduction in sealing performance between the piston and the cylinder due to oil film shortage, and to prevent reduction in refrigeration capacity and efficiency.

A refrigeration apparatus according to another aspect of the present invention includes a refrigerant circuit including: the above-described refrigerant compressor; a radiator that radiates heat of a refrigerant; a decompressor that decompresses the refrigerant; and a heat absorber that absorbs the heat of the refrigerant. In the refrigerant circuit, the refrigerant compressor, the radiator, the decompressor, and the heat absorber are connected by piping in an annular manner.

Provided by the above configuration is the refrigeration apparatus including the above-described refrigerant compressor. By including the refrigerant compressor, the refrigeration apparatus can, even when performing low-speed operation while using the low-viscosity refrigerating machine oil in the refrigerant compressor, prevent reduction in the sealing performance between the piston and the cylinder due to oil film shortage, and prevent reduction in the refrigeration capacity and efficiency.

### Advantageous Effects of Invention

The present invention can provide a refrigerant compressor that makes it possible to prevent reduction in refrigeration capacity and efficiency by preventing reduction in sealing performance due to oil film shortage between a piston and a cylinder even when the refrigerant compressor performs low-speed operation while using low-viscosity refrigerating machine oil, and provide a refrigeration apparatus in which the refrigerant compressor is used.

### Brief Description of Drawings

FIG. 1 is a schematic sectional view of a reciprocating refrigerant compressor according to Embodiment 1.
FIG. 2 is a sectional view of a piston of the refrigerant compressor of FIG. 1, the sectional view showing the piston together with essential components disposed in the vicinity of the piston.
FIG. 3 is a schematic diagram showing a fullerene used in the refrigerant compressor of FIG. 1.
FIG. 4A shows comparison of the refrigerant compressors of Example and Comparative Examples in terms of coefficient of performance (COP).
FIG. 4B shows comparison of the refrigerant compressors of Example and Comparative Examples in terms of input.
FIG. 4C shows comparison of the refrigerant compressors of Example and Comparative Examples in terms of refrigeration capacity.
FIG. 5 is a schematic diagram of a refrigeration apparatus according to Embodiment 2.
FIG. 6 is a schematic sectional view of a conventional refrigerant compressor.
FIG. 7 is a front view of a part of the refrigerant compressor of FIG. 6 as viewed in the direction of an arrow A of FIG. 6.
FIG. 8 is a sectional view of a piston of the refrigerant compressor of FIG. 6, the sectional view showing the piston together with essential components disposed in the vicinity of the piston.

### Description of Embodiments

Hereinafter, embodiments are described with reference to the drawings.

### (Embodiment 1)

### [Refrigerant Compressor]

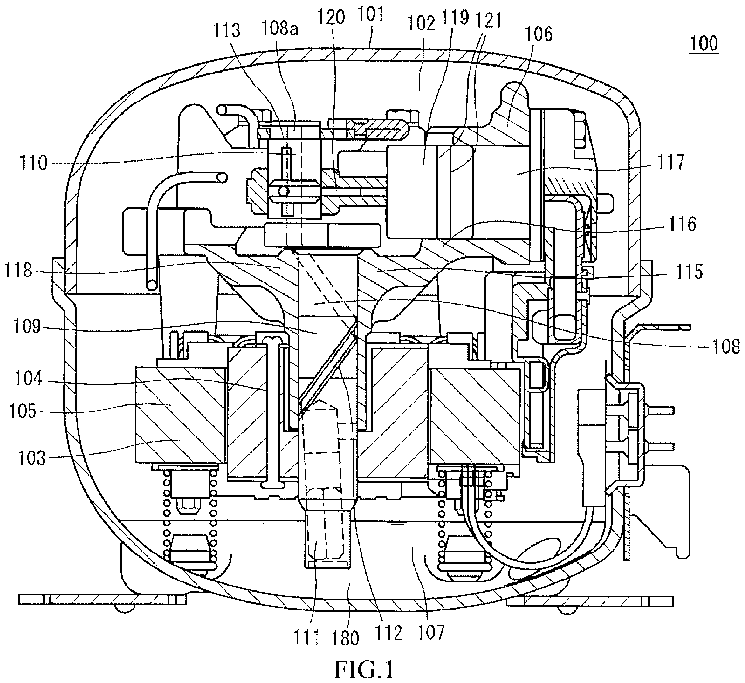

FIG. 1 is a schematic sectional view of a reciprocating refrigerant compressor 100 according to Embodiment 1. The refrigerant compressor 100 shown in FIG. 1 is included in equipment such as an air conditioner or a refrigeration apparatus. The refrigerant compressor 100 includes a sealed container 101, an electric element 105, and a compression element 106.

The inside of the sealed container 101 is filled with refrigerant gas. For example, the refrigerant gas is a natural refrigerant, a HFC (hydrofluorocarbon)-based refrigerant, a HFO (hydrofluoroolefin)-based refrigerant, or a mixed refrigerant containing the HFO (hydrofluoroolefin)-based refrigerant.

For example, the natural refrigerant is at least R600a, R290, or R744, or is a mixed refrigerant containing two or more of these. The refrigerant of the present embodiment is R600a, which is a hydrocarbon-based refrigerant and is a typical example of a natural refrigerant having a low global warming potential value. For example, the HFC-based refrigerant is at least R134a, 152a, R407c, R404A, R410A, or R32, or is a mixed refrigerant containing two or more of these.

For example, the HFO-based refrigerant is at least 1,1,2-trifluoroethylene (R1123), trans-1,2-difluoroethylene (R1132(E)), cis-1,2-difluoroethylene (R1132(Z)), 1,1-difluoroethylene (R1132a), or 2,3,3,3-tetrafluoro-1-propene (HFO-1234yf), or is a mixed refrigerant containing two or more of these. For example, desirably, the HFO-based refrigerant is R1234yf. The HFO-based refrigerant has a molecular structure containing a double bond and two carbon atoms.

Refrigerating machine oil 107 is stored in the sealed container 101. The refrigerating machine oil 107 contains at least one of mineral oil, ester oil, alkylbenzene oil, polyvinyl ether, and polyalkylene glycol. The refrigerating machine oil 107 of the present embodiment contains, as base oil, paraffin-based mineral oil highly compatible with R600a. As described below, the refrigerating machine oil 107 contains an oil film shortage adjusting agent 180 in a dissolved state in such a concentration that deposition of the oil film shortage adjusting agent 180 does not occur at least while the refrigerant compressor 100 is operating.

In a case where the refrigerant compressor 100 is, for example, a refrigerant compressor for use in an air conditioner, the refrigerating machine oil 107 of the present embodiment has, as a first viscosity property, a viscosity at 40°C set to a value within the range of lower than or equal to 100 mm²/s.

In a case where the refrigerant compressor 100 is, for example, a refrigerant compressor for use in a refrigeration apparatus, the refrigerating machine oil 107 of the present embodiment has, as a second viscosity property, a viscosity at 40°C set to a value within the range of lower than or equal to 4.9 mm²/s. In the same case, the refrigerating machine oil 107 has, as a third viscosity property, a viscosity at 120°C set to a value within the range of lower than or equal to 10.0 mm²/s (more preferably lower than or equal to 5.0 mm²/s). In a case where the refrigerant compressor 100 is, for example, a refrigerant compressor for use in a refrigeration apparatus, the refrigerating machine oil 107 may have at least one of the second and third viscosity properties. For example, the refrigerating machine oil 107 may have the third viscosity property without having the second viscosity property.

The viscosity at 40°C herein is a kinematic viscosity corresponding to the ISO viscosity classification complying with ISO 3448: 1975. The viscosity grade of the refrigerating machine oil 107 can be indicated by an ISO viscosity grade number in the classification (i.e., VG indication).

The electric element 105 is accommodated in the sealed container 101, and is driven by electric power supplied from the outside. The electric element 105 includes a stator 103 and a rotor 104. The rotor 104 includes a winding, and is fixed to a crankshaft 108. The crankshaft 108 will be described below. The stator 103 includes a permanent magnet (not shown) therein, and is disposed in a manner to surround the outer periphery of the rotor 104. The electric element 105 is, for example, inverter-driven at a plurality of operating frequencies including an operating frequency of, for example, lower than 20 r/sec.

The compression element 106 is accommodated in the sealed container 101, and is covered with the refrigerating machine oil 107. The compression element 106 is driven by the electric element 105 to compress the refrigerant gas supplied from the outside. Specifically, the compression element 106 includes the crankshaft 108, a cylinder block 115, a coupling member 120, and a piston 119.

As one example, the crankshaft 108 is made of cast iron. The crankshaft 108 is disposed in a manner to extend vertically. The crankshaft 108 includes a main shaft 109 and an eccentric shaft 110, which are arranged side by side in the longitudinal direction. Each of the main shaft 109 and the eccentric shaft 110 extends vertically. The rotor 104 is fixed to the main shaft 109 by press-fitting. The main shaft 109 is pivotally supported by a main bearing 118. As one example, the eccentric shaft 110 is disposed above the main shaft 109. The eccentric shaft 110 is disposed eccentrically with respect to the main shaft 109.

The crankshaft 108 is provided with an oil feeding structure 108a. The oil feeding structure 108a includes a tilted pump 111, a viscous pump 112, a vertical hole 113, and a horizontal hole 114. The tilted pump 111 is formed by a passage whose one end is open in the refrigerating machine oil 107. The passage extends vertically in the main shaft 109, and is tilted. The viscous pump 112 is formed by a circumferential groove. The circumferential groove is formed in the outer surface of the main shaft 109, and is connected to the other end of the tilted pump 111. The vertical hole 113 and the horizontal hole 114 are formed in the eccentric shaft 110. At the upper part of the crankshaft 108, the vertical hole 113 and the horizontal hole 114 are open toward an interior space 102 of the sealed container 101.

As one example, the cylinder block 115 is made of cast iron. A substantially cylindrical cylinder 116 is formed inside the cylinder block 115. The cylinder 116 extends horizontally, and the piston 119 is inserted in the cylinder 116 in such a manner that the piston 119 can make sliding motion in a reciprocating manner. An interior space of the cylinder 116 between the piston 119 and the cylinder head serves as a compression chamber 117. The cylinder block 115 includes the main bearing 118. The eccentric shaft 110 and the piston 119 are coupled together by the coupling member (connecting rod) 120.

A plurality of (in this example, two) annular oil feeding grooves 121 are formed in the outer peripheral portion of the piston 119 over the entire circumference of the piston 119. At the top dead center of the piston 119, the oil feeding grooves 121 coincide in position with the inner peripheral surface of the cylinder block 115 as seen in the radial direction of the cylinder block 115. At the bottom dead center of the piston 119, the oil feeding grooves 121, at least partly, communicate with the interior space 102 outside the cylinder block 115, and the rest of the oil feeding grooves 121 is positioned inside the cylinder block 115.

The compression element 106 includes at least a pair of slide members that slide on each other. The sliding surface of at least one of the pair of slide members is made of a non-ferrous material. The non-ferrous material contains at least one of an aluminum alloy, a magnesium alloy, and a resin material. The compression element 106 of the present embodiment includes a plurality of pairs of slide members. The pairs of slide members include a pair formed by the piston 119 and the cylinder 116, and also, a pair formed by the eccentric shaft 110 and the coupling member 120. The slide members, except their sliding surfaces, may be made of a material different from that of the sliding surfaces.

At the time of driving the refrigerant compressor 100, electric power supplied from the outside, such as electric power from a commercial power source, is supplied to the electric element 105 via an external inverter drive circuit (not shown). Accordingly, the electric element 105 is inverter-driven at a plurality of operating frequencies.

The crankshaft 108 is rotated by the rotor 104 of the electric element 105. As a result, the eccentric shaft 110 makes eccentric motion. In the compression chamber 117 of the cylinder block 115, the coupling member 120 causes the piston 119 to make reciprocating motion between the top dead center and the bottom dead center. Due to the reciprocating motion of the piston 119, the refrigerant gas that has been led from a cooling system (not shown) into the sealed container 101 is sucked into the compression chamber 117 and compressed therein. This compression operation is repeated, and thereby the refrigerant is compressed and sequentially fed from the refrigerant compressor 100 to the cooling system.

Meanwhile, the refrigerating machine oil 107 in the sealed container 101 is pumped upward by the tilted pump 111 due to centrifugal force caused by the rotation of the crankshaft 108, and is fed to sliding portions via the viscous pump 112. As a result, the sliding portions are lubricated by the refrigerating machine oil 107. Also, the refrigerating machine oil 107 is scattered to the interior space 102 via the vertical hole 113 and the horizontal hole 114.

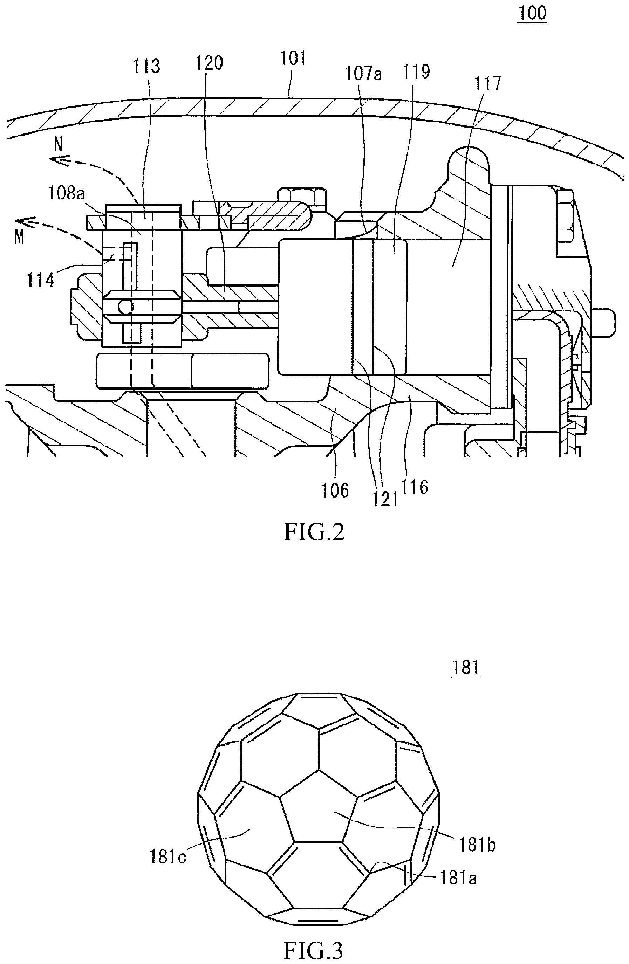

As shown in FIG. 2, at the time, the refrigerating machine oil 107 from the vertical hole 113 and the horizontal hole 114 is scattered to the interior space 102 particularly along pre-formed discharge passages M and N. The refrigerating machine oil 107 thus scattered adheres to the peripheral surface of the piston 119 and an end surface of the cylinder block 115 on the eccentric shaft 110 side, and accordingly, an oil sump 107a is formed due to, for example, surface tension.

Due to a capillary phenomenon, the oil sump 107a is formed over the entire circumference of the annular oil feeding grooves 121 to fill the annular oil feeding grooves 121. The refrigerating machine oil 107 of the oil sump 107a, which is accumulated in the annular oil feeding grooves 121, forms an oil film, and thereby sealing performance between the piston 119 and the cylinder 116 is maintained, which reduces refrigerant leakage loss.

In the refrigerant compressor 100, since the refrigerating machine oil 107 stored in the sealed container 101 contains the oil film shortage adjusting agent 180 in a dissolved state, the oil film formed by the refrigerating machine oil 107 can be readily maintained, for example, on the surfaces of sliding portions of the compression element 106. Accordingly, even in a case where the refrigerant compressor 100 performs low-speed operation while using the low-viscosity refrigerating machine oil 107, the oil film can be stably formed and maintained, for example, at a sliding gap between the piston 119 and the cylinder 116 in the compression element 106.

The refrigerating machine oil 107 contains the oil film shortage adjusting agent 180 in a dissolved state in such a concentration that deposition of the oil film shortage adjusting agent 180 does not occur at least while the refrigerant compressor 100 is operating. Therefore, for example, no damage to the sliding surfaces between the piston 119 and the cylinder 116 will be caused by a deposit of the oil film shortage adjusting agent 180. This makes it possible to prevent reduction in the sealing performance between the piston 119 and the cylinder 116 due to oil film shortage, and to prevent reduction in the refrigeration capacity and efficiency.

That is, the refrigerant compressor 100 is configured by accommodating therein the electric element 105 and the compression element 106, the compression element 106 being driven by the electric element 105 to compress the refrigerant, and using the refrigerating machine oil 107 to which the oil film shortage adjusting agent 180 is added, the oil film shortage between the piston 119 and the cylinder 116 can be prevented, and the sealing performance can be maintained. This makes it possible to reduce refrigerant leakage loss from the compression chamber 117, and thereby the refrigerant compressor 100 with high efficiency can be realized. Hereinafter, the oil film shortage adjusting agent 180 is described in detail.

### [Oil Film Shortage Adjusting Agent]

The oil film shortage adjusting agent 180 allows an oil film of the refrigerating machine oil 107 to be readily formed, for example, on the surfaces of sliding portions of the compression element 106, and prevents the oil film shortage, thereby allowing the oil film to be maintained. The oil film shortage adjusting agent 180 is dissolved in the refrigerating machine oil 107, and deposition of the oil film shortage adjusting agent 180 will not occur under normal operating conditions of the refrigerant compressor 100. This makes it possible to prevent a situation where, for example, the surfaces of the sliding portions of the compression element 106 are rubbed by a deposit of the oil film shortage adjusting agent 180 and thereby damaged.

The oil film shortage adjusting agent 180 is soluble in an organic solvent. As one example, the oil film shortage adjusting agent 180 contains a fullerene 181. In this example, the oil film shortage adjusting agent 180 is constituted only by the fullerene 181.

FIG. 3 is a schematic diagram showing the fullerene 181 used in the refrigerant compressor 100 of FIG. 1. The fullerene 181 is constituted by a plurality of carbon atoms that are bound to form a spherical network structure. The fullerene 181 is the third carbon allotrope following diamond and graphite. A single cluster (molecule) can be removed from the fullerene 181.

The fullerene 181 is a carbon allotrope. However, due to its structural characteristics, the fullerene 181 is soluble in an organic solvent, such as benzene or toluene. Accordingly, the fullerene 181 is well dissolvable in the refrigerating machine oil 107. Also, it has been known that since the oil film shortage adjusting agent 180 contains the fullerene 181, the refrigerating machine oil 107 spreads well, and accordingly, even when the viscosity of the refrigerating machine oil 107 is lowered, the oil film shortage can be prevented, and thereby the oil film can be maintained more easily. As described below, the upper limit amount of the fullerene 181 to be added to the refrigerating machine oil 107 is limited, and thereby deposition of the fullerene 181 in the refrigerating machine oil 107 is prevented.

As one example, the mean particle diameter of a single cluster of the fullerene 181 is set to a value within the range of greater than or equal to 100 pm but less than or equal to 10 nm (in this example, about 1 nm). The fullerene 181 is a fine particle whose sectional shape is substantially circular. It should be noted that the term "mean particle diameter" herein refers to a value that is obtained in the following manner: by using a dynamic light-scattering method, scattered light from particles in Brownian motion is detected and a diffusion coefficient is determined; and the mean particle diameter value is derived by using the Einstein-Stokes relation.

The fullerene 181 of the present embodiment is a mixed fullerene that is a mixture of C60, C70, and a high-order fullerene. FIG. 3 shows the structure of C60. As shown in FIG. 3, a C60 cluster is constituted by 60 carbon atoms 181a, which are bound to form a truncated icosahedron that consists of 12 five-membered rings 181b and 20 six-membered rings 181c. C60 is considered to have a particularly high molecular bearing effect. C70 is constituted by 70 carbon atoms 181a, and is considered to have a molecular bearing effect similar to that of C60.

It should be noted that the mixed fullerene may contain a fullerene different from those mentioned above. The number of carbon atoms contained in a single cluster of the fullerene 181 may be less than 60. The oil film shortage adjusting agent 180 may contain different kinds of fullerenes 181 each containing a different number of carbon atoms in a single cluster. Alternatively, the oil film shortage adjusting agent 180 may contain, for example, a plurality of kinds of fullerenes 181 each having a different mean particle diameter. The oil film shortage adjusting agent 180 may contain only one kind of fullerene 181.

A known method can be suitably chosen as a method of producing the fullerene 181. As one example, by synthesizing a hydrocarbon raw material by a predetermined combustion process, soot that contains the fullerene 181 can be obtained. The obtained soot is filtered with an organic solvent, and thereby a solution in which the fullerene 181 containing C60, C70, and a high-order fullerene (alternatively referred to as the mixed fullerene) is dissolved can be separated from the residue. By purifying the solution, the mixed fullerene is obtained, or various fullerenes are each isolated.

### [Confirmation Test 1]

A confirmation test for confirming the solubility of the fullerene 181 in paraffin-based mineral oil was performed in the following manner. At room temperature (25°C), a mixed fullerene that is a mixture of C60, C70, and a high-order fullerene (such as C76 or C82), the mixed fullerene having a diameter set to a value within the range of greater than or equal to 100 pm but less than or equal to 10 nm, was prepared as the fullerene 181. Then, the oil film shortage adjusting agent 180 constituted only by this fullerene 181 was prepared. A suitable amount of the fullerene 181 was added to paraffin-based mineral oil, which was then stirred sufficiently, and thereby a plurality of samples of the refrigerating machine oil 107 were prepared. Thereafter, each sample was left stand for a certain period of time. Then, the presence or absence of precipitation and deposition of the fullerene 181 in each sample was checked.

As a result, in a case where the refrigerating machine oil 107 contained the fullerene 181 within the range of less than or equal to 0.5% by weight, neither precipitation nor deposition of the fullerene 181 was found in each sample. On the other hand, in a case where the refrigerating machine oil 107 contained the fullerene 181 within the range of greater than 0.5% by weight, both precipitation and deposition of the fullerene 181 were found. Consequently, it has been confirmed that, in the paraffin-based mineral oil used in this test, the fullerene 181 within a predetermined range is soluble.

Next, the same test as above was performed under conditions taking into consideration a temperature-pressure range that is expected in a refrigerant-refrigerating machine oil coexisting atmosphere in the refrigerant compressor 100. As a result, it has been confirmed that if the refrigerating machine oil 107 contains the fullerene 181 within the range of greater than 0.05% by weight, both precipitation and deposition of the fullerene 181 occur.

From the above test results, it has been found that, at room temperature (25°C), the saturated solubility of the fullerene 181 in paraffin-based mineral oil is a value in a case where the refrigerating machine oil 107 contains 0.5% by weight of the fullerene 181. In other words, the saturated solubility is the upper limit amount of the fullerene 181 to be added to the refrigerating machine oil 107, at which amount a dissolution phenomenon is established, in which the added fullerene 181 is entirely dispersed in the paraffin-based mineral oil to form a homogeneous system.

Further, it has been found that, in consideration of the temperature-pressure range that is expected in the refrigerant-refrigerating machine oil coexisting atmosphere in the refrigerant compressor 100, it is desirable for the refrigerating machine oil 107 to contain the fullerene 181 within the range of less than or equal to 0.05% by weight.

Also, from other test results, it has been found that, at room temperature (25°C), the advantageous effects that are obtained by adding the fullerene 181 to the refrigerating machine oil 107 are significantly reduced in a case where the refrigerating machine oil 107 contains the fullerene 181 within the range of less than 0.0001% by weight.

Desirably, the amount of the fullerene 181 contained in the refrigerating machine oil 107 is suitably set in accordance with, for example, the refrigerant used in the refrigerant compressor 100, the kinds and conditions of oil components in the refrigerating machine oil 107, the operating temperature of the refrigerant compressor 100, and the internal pressure value of the refrigerant compressor 100. As one example, desirably, the refrigerating machine oil 107 contains the fullerene 181 within the range of greater than or equal to 0.0001% by weight but less than or equal to 0.5% by weight. More desirably, the refrigerating machine oil 107 contains the fullerene 181 within the range of greater than or equal to 0.001% by weight but less than or equal to 0.05% by weight.

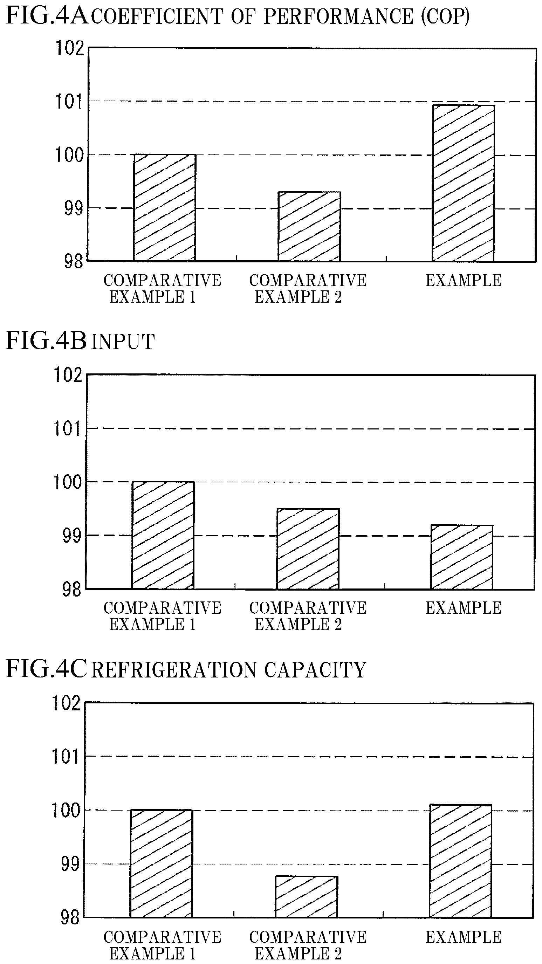

Next, a performance evaluation test was performed on refrigerant compressors of Example and Comparative Examples 1 and 2, in which various refrigerating machine oils with different specifications were encapsulated, respectively. FIG. 4A shows comparison of the refrigerant compressors of Example and Comparative Examples 1 and 2 in terms of coefficient of performance (COP). The coefficient of performance is a coefficient used as an index indicating the energy consumption efficiency of refrigerator-freezer equipment or the like. The coefficient of performance is a value that is obtained by dividing a refrigeration capacity (W) by an applied input (W). FIG. 4B shows comparison of the refrigerant compressors of Example and Comparative Examples 1 and 2 in terms of input. FIG. 4C shows comparison of the refrigerant compressors of Example and Comparative Examples 1 and 2 in terms of refrigeration capacity. FIGS. 4A to 4C show evaluation results of Example and Comparative Examples 1 and 2 by using relative ratios, assuming that the evaluation result of Comparative Example 1 is 100.

In recent years, for the purpose of improving the efficiency, it has been considered to use, in the refrigerant compressor 100, refrigerating machine oil having a lower viscosity than that of conventional refrigerating machine oil (specifically, it has been considered to use refrigerating machine oil whose viscosity at 40°C is lower than or equal to 4.9 mm²/s). In light of this, in Example, the fullerene 181 serving as the oil film shortage adjusting agent 180 was dissolved in paraffin-based mineral oil having a viscosity at 40°C of 3.0 mm²/s, and thus the refrigerating machine oil 107 containing 0.001% by weight of the fullerene 181 was prepared.

In Comparative Example 1, refrigerating machine oil made only of paraffin-based mineral oil having a viscosity at 40°C of 4.9 mm²/s was used. In Comparative Example 2, refrigerating machine oil made only of paraffin-based mineral oil having a viscosity at 40°C of 3.0 mm²/s was used, i.e., the viscosity at 40°C of the refrigerating machine oil used in Comparative Example 2 was lower than that of the refrigerating machine oil used in Comparative Example 1. That is, the fullerene 181 was not added to the refrigerating machine oil used in each of Comparative Examples 1 and 2.

As shown in FIGS. 4A and 4B, it has been found that the coefficient of performance is higher in Example than in Comparative Examples 1 and 2. Also, it has been found that the input is lower in Example than in Comparative Examples 1 and 2. Further, it has been found that Example has higher refrigeration capacity than that of Comparative Example 2, and has substantially the same refrigeration capacity as that of Comparative Example 1.

On the other hand, it has been found that the coefficient of performance is lower in Comparative Example 2 than in Comparative Example 1, and that Comparative Example 2 has significantly lower refrigeration capacity than that of Comparative Example 1. The viscosity of the refrigerating machine oil is lower in Comparative Example 2 than in Comparative Example 1. Accordingly, in Comparative Example 2, frictional loss in fluid lubrication regions of the compression element, such as sliding surfaces, can be reduced, and thereby the input can be lowered to a relatively great degree. However, forming and maintaining the oil film in Comparative Example 2 is difficult, which is considered to be a cause of the significant reduction in refrigeration capacity in Comparative Example 2.

Specifically, in the refrigerant compressor, usually, the annular oil feeding grooves 121 formed in the piston 119 retain the oil film of the refrigerating machine oil 107 due to a capillary phenomenon, and thereby the sealing performance between the piston 119 and the cylinder 116 is exerted. As a result, leakage of the refrigerant gas from the gap between the piston 119 and the cylinder 116 is suppressed.

When the viscosity of the refrigerating machine oil is lowered (specifically, to 4.9 mm²/s or lower), for example, the molecules of the oil components contained in the refrigerating machine oil become smaller, and molecular motion increases, accordingly. As a result, the refrigerating machine oil tends to volatilize more under the same temperature condition. Also, when the viscosity of the refrigerating machine oil is lowered, there is a risk that the adsorptive power of the refrigerating machine oil for the adsorption to the sliding surfaces of, for example, the compression element may be reduced.

For these reasons, in Comparative Example 2, the sealing performance is reduced, and in the process of sucking and compressing the refrigerant during the reciprocating motion of the piston 119, leakage of the refrigerant from between the piston 119 and the cylinder 116 tends to occur, which is considered to be a cause of the significant reduction in refrigeration capacity in Comparative Example 2.

On the other hand, in Example, even though the low-viscosity refrigerating machine oil 107 having a viscosity at 40°C of 3.0 mm²/s was used, reduction in refrigeration capacity was suppressed. It is clear from this result that, owing to the oil film shortage adjusting agent 180 dissolved in the refrigerating machine oil 107, favorable sealing performance can be stably maintained even when the viscosity of the refrigerating machine oil 107 is lowered.

It should be noted that the reason why the fullerene 181 contained in the oil film shortage adjusting agent 180 exerts the above-described advantageous effects has not been clearly elucidated in detail. However, it has been pointed out that a fullerene has a radical trapping effect derived from its high electron-accepting property owing to structural symmetry. Accordingly, it is conceivable that in the refrigerating machine oil 107 containing the fullerene 181, for example, the fullerene 181 acts on the intermolecular attractive force of the oil components, and thereby the molecular motion of the oil components becomes enactive, by which the volatilization of the oil components is inhibited.

In Confirmation Test 1, paraffin-based mineral oil having a viscosity at 40°C of 3.0 mm²/s was used as the refrigerating machine oil 107. However, it has been confirmed that even with the use of paraffin-based mineral oil having a viscosity at 40°C of 2.2 mm²/s, the same advantageous effects are obtained. It is understood from these confirmation results that, desirably, the viscosity at 40°C of the refrigerating machine oil 107 is at least 2.2 mm²/s or higher.

### [Confirmation Test 2]

Next, a durability test was performed by using actual refrigerant compressors. In the durability test, refrigerant compressors were used, each of which included the coupling member 120 having a sliding surface made of an aluminum alloy and the eccentric shaft 110 having a sliding surface made of a ferrous material. The oil film shortage adjusting agent 180 containing the fullerene 181 in a concentration of 50 ppm was prepared as Example 1, and the oil film shortage adjusting agent 180 containing the fullerene 181 in a concentration of 100 ppm was prepared as Example 2. Also, an oil film shortage adjusting agent containing no fullerene was prepared as Comparative Example. In Examples 1 to 2 and Comparative Example, paraffin-based mineral oil having a viscosity at 40°C of 2.2 mm²/s was used as the refrigerating machine oil.

The refrigerant compressors, each encapsulating therein the refrigerating machine oil containing the oil film shortage adjusting agent, were operated in the same predetermined high-temperature and high-load intermittent operation mode, in which an operating state and a stopped state were alternated repeatedly with short cycles. In this manner, wear of the sliding surface of the eccentric shaft 110 and the sliding surface of the coupling member 120 was accelerated. After the test, each refrigerant compressor was disassembled, and the wear of the coupling member 120 was checked.

Consequently, assuming that the amount of wear of the coupling member 120 in Comparative Example was 100, the amount of wear of the coupling member 120 in each of Examples 1 and 2 was in the range of greater than or equal to 46.1 but less than or equal to 72.4. Thus, even though the coupling member 120 having the sliding surface made of an aluminum alloy was used, it was confirmed in each of Examples 1 and 2 that the amount of wear of the coupling member 120 was significantly reduced compared to Comparative Example. It is understood from the test results that according to the refrigerant compressor 100 of the present embodiment, even in a case where an aluminum alloy or a different non-ferrous material is used for the sliding surface of a slide member, the amount of wear of the slide member can be suitably reduced.

In recent years, in order to improve the efficiency of a refrigerant compressor, low-viscosity refrigerating machine oil has been used. In this case, however, there is a risk of increase in the wear of the sliding surfaces of slide members included in the compression element of the refrigerant compressor. In this respect, for example, by using an extreme-pressure additive such as a phosphorus-based extreme-pressure additive, the wear of the sliding surfaces is inhibited. However, if at least one of a pair of slide members has a sliding surface made of a non-ferrous material, it is difficult to obtain a sufficient wear inhibiting effect even with use of such an additive agent.

On the other hand, according to the refrigerant compressor 100 of the present embodiment, even though the low-viscosity refrigerating machine oil 107 is used, the amount of wear of the sliding surfaces of the pair of slide members can be suitably reduced as described above, and the refrigerant compressor 100 can be driven with high efficiency. Also, it has been found from the test results of Examples 1 and 2 that in order to obtain such advantageous effects, desirably, the viscosity at 40°C of the refrigerating machine oil 107 is at least 2.2 mm²/s or higher.

It should be noted that the inventors of the present invention also conducted another experiment. It has been confirmed from this other experiment that even in a case where the sliding surface of one of a pair of slide members of the compression element of the refrigerant compressor is made of a non-ferrous material and the sliding surface of the other slide member is made of a ferrous material, the same advantageous effects as those described above are obtained. It has also been confirmed that in a case where the sliding surface of each of the pair of slide members of the compression element of the refrigerant compressor is made of a ferrous material, the amount of wear of the sliding surfaces is less than in a case where the sliding surface of each of the pair of slide members is made of a non-ferrous material, and thus the refrigerant compressor 100 can be driven with higher efficiency.

The above test results indicate that, according to the refrigerant compressor 100 of the present embodiment, even with the use of the low-viscosity refrigerating machine oil 107, the sealing performance between the piston 119 and the cylinder 116 can be maintained, and thereby refrigerant leakage loss from the compression chamber 117 can be reduced. Also, wear of the slide members included in the compression element 106 of the refrigerant compressor 100 can be reduced, and thereby the refrigerant compressor 100 can be driven stably. This makes it possible to realize high performance of the refrigerant compressor 100.

Further, since the oil film shortage adjusting agent 180 contains the fullerene 181, the formation of the oil film between the piston 119 and the cylinder 116 can be facilitated. As a result, reduction in the sealing performance between the piston 119 and the cylinder 116 due to the oil film being lost can be prevented, and also, refrigerant leakage loss from the compression chamber 117 can be reduced. This makes it possible to realize high performance of the refrigerant compressor 100.

As mentioned above, the fullerene 181 has a high electron-accepting property owing to structural symmetry. For example, in a case where the fullerene 181 is C60, a single cluster can capture six electrons. Thus, the fullerene 181 is expected to remove radicals that are factors causing oxidation of the refrigerating machine oil 107 and the refrigerant, thereby inhibiting deterioration of the refrigerating machine oil 107 and the refrigerant. Moreover, since the fullerene 181 is not consumed by chemical reactions, the reliability of the refrigerant compressor 100 can be secured for a long term.

Therefore, for example, in a case where the refrigerant compressor 100 is included in a stationary refrigeration apparatus installed in a room or the like, the refrigeration apparatus can be stably driven for several years while suppressing the generation of vibration and noise. Such a stationary refrigeration apparatus is expected to be used, for example, in an environment in which the refrigeration apparatus is continuously driven without maintenance for a long term. Even in such a case, the fullerene 181 contained in the refrigerating machine oil 107 will not be lost, which makes it possible to stably drive the refrigeration apparatus. Thus, the refrigerant compressor 100 can be favorably used particularly in a stationary refrigeration apparatus.

It should be noted that the shape of the fullerene 181 is spherical or elliptic spherical. Therefore, when the sliding surfaces facing each other move relative to each other, the fullerene 181 contained in the refrigerating machine oil 107 rolls, and rolling friction is generated, which consequently exerts a molecular bearing effect. As a result, the frictional coefficient of the sliding portions is reduced, and the input can be lowered favorably. Therefore, for example, the start torque of the refrigerant compressor 100 can be reduced, and the starting performance of the refrigerant compressor 100 can be improved significantly.

Further, since the fullerene 181 is uniformly dispersed and dissolved in the refrigerating machine oil 107, even when the refrigerant compressor 100 shifts from an operating state to a stopped state, the uniform dispersion of the fullerene 181 in the refrigerating machine oil 107 is maintained. Therefore, when the refrigerant compressor 100 is re-started, metal contact can be reduced, for example, at the surfaces of the sliding portions of the compression element 106, and thereby favorable durability of the refrigerant compressor 100 can be maintained for a long term.

Still further, since the oil film shortage adjusting agent 180 contains an organic compound with polarity, the formation of the oil film between the piston 119 and the cylinder 116 can be facilitated. Accordingly, during low-speed rotation and during the use of the low-viscosity refrigerating machine oil 107, reduction in the sealing performance between the piston 119 and the cylinder 116 due to the oil film being lost can be prevented. Therefore, refrigerant leakage loss from the compression chamber 117 can be further reduced, and further improvement in the performance of the refrigerant compressor 100 can be realized.

Still further, the refrigerating machine oil 107 used in the refrigerant compressor 100 contains the oil film shortage adjusting agent 180 within the range of greater than or equal to 0.0001% by weight but less than or equal to 0.5% by weight. Accordingly, for example, in a case where the refrigerant compressor 100 is used in a refrigeration apparatus, the formation of the oil film can be facilitated. Containing the oil film shortage adjusting agent 180 in the refrigerating machine oil 107 within this range makes it possible to prevent a situation where deposition of the oil film shortage adjusting agent 180 is caused by excessive addition of the oil film shortage adjusting agent 180 to the refrigerating machine oil 107. This makes it possible to prevent clogging of narrow tubes present in the compression element 106 and to prevent damage to the sliding surfaces.

Still further, the viscosity at 40°C of the refrigerating machine oil 107 used in the refrigerant compressor 100 is set to a value within the range of less than or equal to 100 mm²/s. Consequently, for example, in a case where the refrigerant compressor 100 is used in an air conditioner, even when the refrigerant compressor 100 is driven at a relatively high temperature in the installation environment of the air conditioner, viscosity loss of the refrigerant compressor 100 can be reduced while reducing refrigerant leakage loss, and the input of the refrigerant compressor 100 can be lowered.

Still further, the viscosity at 40°C of the refrigerating machine oil 107 used in the refrigerant compressor 100 is set to a value within the range of less than or equal to 4.9 mm²/s. Consequently, for example, in a case where the refrigerant compressor 100 is used in a refrigeration apparatus, viscosity loss of the refrigerant compressor 100 can be reduced while reducing refrigerant leakage loss, and the input of the refrigerant compressor 100 can be lowered.

Still further, the viscosity at 120°C of the refrigerating machine oil 107 used in the refrigerant compressor 100 is set to a value within the range of less than or equal to 10.0 mm²/s. Consequently, for example, in a case where the refrigerant compressor 100 is used in a refrigeration apparatus, even when the refrigerant compressor 100 is driven at a relatively high temperature in the installation environment of the refrigeration apparatus, viscosity loss of the refrigerant compressor 100 can be reduced while reducing refrigerant leakage loss, and the input of the refrigerant compressor 100 can be lowered.

Still further, in the present embodiment, since the viscosity of the refrigerating machine oil 107 is kept low within a temperature range from 40°C to 120°C, viscosity loss of the refrigerant compressor 100 can be stably reduced over a wide temperature range. Therefore, for example, even in a use application in an environment where the temperature tends to be high, or in a use application in an environment where the temperature fluctuates significantly, the input of the refrigerant compressor 100 can be lowered while reducing refrigerant leakage loss.

Still further, even when a natural refrigerant that is at least R600a, R290, or R744, or that is a mixed refrigerant containing two or more of these, is used as the refrigerant, and at least one of mineral oil, ester oil, alkylbenzene oil, polyvinyl ether, and polyalkylene glycol is used as the refrigerating machine oil 107, the same advantageous effects as those described in the present embodiment are obtained, and in addition, the use of the refrigerant having a small global warming potential value contributes to global warming reduction.

Still further, even when a HFC-based refrigerant that is at least R134a, 152a, R407c, R404A, R410A, or R32, or that is a mixed refrigerant containing two or more of these, is used as the refrigerant, and at least one of mineral oil, ester oil, alkylbenzene oil, polyvinyl ether, and polyalkylene glycol is used as the refrigerating machine oil 107, the same advantageous effects as those described above are obtained, and the highly reliable and highly efficient refrigerant compressor 100 can be realized.

Still further, even when a HFO-based refrigerant such as R1234yf, or a mixed refrigerant containing the HFO-based refrigerant, is used as the refrigerant, and at least one of mineral oil, ester oil, alkylbenzene oil, polyvinyl ether, and polyalkylene glycol is used as the refrigerating machine oil 107, the same advantageous effects as those described above are obtained.

Still further, in this case, since the refrigerating machine oil 107 contains the fullerene 181, acid substances (e.g., hydrofluoric acid) that are generated when the refrigerant is decomposed due to sliding heat or the like can be trapped and inactivated by the fullerene 181. In this manner, increase in the total acid number of the oil components in the refrigerating machine oil 107 can be reduced, and the aggressiveness of the acid substances against, for example, the surfaces of the sliding portions of the compression element 106 can be reduced. This makes it possible to realize the highly reliable and highly efficient refrigerant compressor 100. Also, the use of the refrigerant that is non-combustible and that has a low global warming potential value can contribute to global warming reduction.

Still further, since the electric element 105 is inverter-driven at a plurality of operating frequencies, abnormal wear can be prevented and high reliability can be maintained in each of low-speed operation, in which the amount of oil fed to the sliding portions is reduced, and severe high-speed operation, in which the rotation speed increases to cause increase in the load on the sliding portions and the viscosity of the refrigerating machine oil is reduced due to heat generated by the sliding portions. In addition, since the operation of the refrigerant compressor 100 is optimized by inverter control, energy saving can be realized.

The refrigerating machine oil 107 of the present embodiment contains paraffin-based mineral oil. Also in a case where the refrigerating machine oil 107 contains at least one of different mineral oil, ester oil, alkylbenzene oil, polyvinyl ether, and polyalkylene glycol, the fullerene 181 is favorably dissolved in the refrigerating machine oil 107. For example, it has been experimentally confirmed that the fullerene 181 is soluble in a solvent containing a compound having a carbonyl group (C = O group) or an ether group (R-O-R' group) (where R and R' are organic groups), and that the saturated solubility of the fullerene 181 in the refrigerating machine oil 107 containing ester oil is the same as the saturated solubility of the fullerene 181 in paraffin-based mineral oil.

The present embodiment gives an example in which the oil film shortage adjusting agent 180 contains the fullerene 181. The oil film shortage adjusting agent 180 may be constituted only by the fullerene 181, or may contain a different component in addition to the fullerene 181.

The oil film shortage adjusting agent 180 according to one variation of the present embodiment contains an organic compound with polarity. The organic compound component is, for example, an organic polymer with polarity. Specific examples include polymethacrylate (PMA)-based materials, olefin copolymer (OCP)-based materials, and polyisobutylene (PIB)-based materials. Also in the case of using the oil film shortage adjusting agent 180 according to this variation, the same advantageous effects as those described above are obtained.

The present embodiment has described an advantageous effect that reduction in the performance of the refrigerant compressor 100 is prevented when the refrigerant compressor 100 performs low-speed operation (e.g., at an operating frequency of 17 Hz). However, the same advantageous effect is obtained not only when the refrigerant compressor 100 performs low-speed operation, but also when the refrigerant compressor 100 operates at a commercial rotation speed or when the refrigerant compressor 100 performs high-speed operation at an even higher rotation speed.

Specifically, since the refrigerant compressor 100 of the present embodiment is inverter-driven at a plurality of operating frequencies, the amount of oil fed to the sliding portions is reduced during low-speed operation; however, high performance of the refrigerant compressor 100 can be maintained owing to the action of the oil film shortage adjusting agent 180. On the other hand, during high-speed rotation, the load on the sliding portions increases, and the viscosity of the refrigerating machine oil is reduced due to heat generated by the sliding portions; however, owing to the action of the oil film shortage adjusting agent 180, abnormal wear can be prevented, and high reliability can be maintained. In addition, since the operation of the refrigerant compressor 171 is optimized by inverter control, energy saving can be realized.

The refrigerant compressor is not limited to a reciprocating compressor, but may be a different type of compressor, such as a rotary compressor or a scroll compressor. Hereinafter, another embodiment is described focusing on differences from Embodiment 1.

### (Embodiment 2)

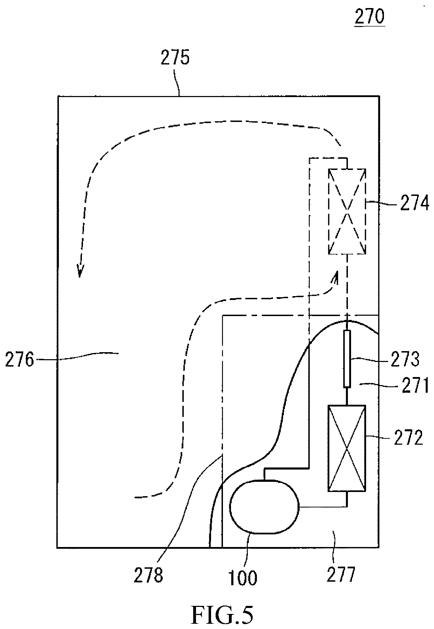

FIG. 5 is a schematic diagram of a refrigeration apparatus 270 according to Embodiment 2. Hereinafter, a fundamental configuration of the refrigeration apparatus 270 is described briefly. As shown in FIG. 5, the refrigeration apparatus 270 is one example of equipment in which the refrigerant compressor 100 is used. The refrigeration apparatus 270 may be included in a refrigerator. The refrigeration apparatus 270 includes a body 275, a dividing wall 278, and a refrigerant circuit 271.

The body 275 includes a thermally insulated box and a door. The box is provided with an opening that communicates with the inside of the box. The opening of the box is opened and closed by the door. The body 275 includes a storage space 276 and a machinery room 277. The storage space 276 is a space in which a product is stored. In the machinery room 277, the refrigerant circuit 271 is disposed, which cools the inside of the storage space 276. The storage space 276 and the machinery room 277 are divided by the dividing wall 278. An air feeder (not shown) is disposed in the storage space 276. FIG. 5 is a partially cutaway view of the box, showing the inside of the body 275.

The refrigerant circuit 271 includes the refrigerant compressor 100, a radiator 272, a decompressor 273, and a heat absorber 274. The refrigerant compressor 100, the radiator 272, the decompressor 273, and the heat absorber 274 are connected by piping in an annular manner.

The radiator 272 radiates the heat of the refrigerant. The decompressor 273 decompresses the refrigerant. The heat absorber 274 absorbs the heat of the refrigerant. The heat absorber 274 is disposed in the storage space 276, and generates cooling heat. As indicated by arrows in FIG. 5, the air feeder causes the cooling heat generated by the heat absorber 274 to circulate inside the storage space 276. In this manner, the air in the storage space 276 is stirred, and the inside of the storage space 276 is cooled.

Since the refrigeration apparatus 270 configured as above includes the above-described refrigerant compressor 100, the refrigeration apparatus 270 can, even when performing low-speed operation while using the low-viscosity refrigerating machine oil 107, prevent reduction in the sealing performance between the piston 119 and the cylinder 116 due to oil film shortage, and prevent reduction in the refrigeration capacity and efficiency.

Specifically, since the refrigeration apparatus 270 includes the refrigerant circuit 271, in which the refrigerant compressor 100, the radiator 272, the decompressor 273, and the heat absorber 274 are connected by piping in an annular manner, power consumption can be reduced and energy saving can be realized by the refrigerant compressor 100 having improved volumetric efficiency.

The present invention is not limited to the above-described embodiments. Modifications, additions, or deletions can be made to the configurations without departing from the scope of the present invention. The above-described embodiments may be combined with each other in any manner. For example, part of a configuration in one embodiment may be applied to another embodiment. The scope of the present invention is defined by the appended claims, and all changes that fall within metes and bounds of the claims, or equivalence of such metes and bounds thereof are therefore intended to be embraced by the claims. The equipment in which the refrigerant compressor 100 is used is not limited to an air conditioner or a refrigeration apparatus, but may be, for example, a washing and drying machine or a water heater.

### Industrial Applicability

As described above, the present invention has an excellent advantageous effect of being able to provide a refrigerant compressor that makes it possible to prevent reduction in refrigeration capacity and efficiency by preventing reduction in sealing performance due to oil film shortage between a piston and a cylinder even when the refrigerant compressor performs low-speed operation while using low-viscosity refrigerating machine oil, and to provide a refrigeration apparatus in which the refrigerant compressor is used. Therefore, the present invention is useful when widely applied to refrigerant compressors and refrigeration apparatuses using the same, because such applications make it possible to exert the above advantageous effect meaningfully.

### Reference Signs List

- 100: refrigerant compressor
- 105: electric element
- 106: compression element
- 107: refrigerating machine oil
- 180: oil film shortage adjusting agent
- 181: fullerene
- 270: refrigeration apparatus
- 271: refrigerant circuit
- 272: radiator
- 273: decompressor
- 274: heat absorber

## Claims

1. A refrigerant compressor comprising:
a sealed container in which refrigerating machine oil is stored;
an electric element accommodated in the sealed container and driven by electric power supplied from outside; and
a compression element accommodated in the sealed container and covered with the refrigerating machine oil, the compression element being driven by the electric element to compress refrigerant gas supplied from outside, wherein
the refrigerating machine oil contains an oil film shortage adjusting agent in a dissolved state in such a concentration that deposition of the oil film shortage adjusting agent does not occur at least while the refrigerant compressor is operating.

2. The refrigerant compressor according to claim 1, wherein
the oil film shortage adjusting agent contains a fullerene.

3. The refrigerant compressor according to claim 1, wherein
the oil film shortage adjusting agent contains an organic compound with polarity.

4. The refrigerant compressor according to any one of claims 1 to 3, wherein
the compression element includes at least a pair of slide members that slide on each other, and
a sliding surface of at least one of the pair of slide members is made of a non-ferrous material.

5. The refrigerant compressor according to claim 4, wherein
a sliding surface of the other one of the pair of slide members is made of a ferrous material.

6. The refrigerant compressor according to claim 4 or 5, wherein
the non-ferrous material contains at least one of an aluminum alloy, a magnesium alloy, and a resin material.

7. The refrigerant compressor according to any one of claims 1 to 3, wherein
the compression element includes at least a pair of slide members that slide on each other, and
each sliding surface of the pair of slide members is made of a ferrous material.

8. The refrigerant compressor according to any one of claims 1 to 7, wherein
the refrigerating machine oil contains the oil film shortage adjusting agent within a range of greater than or equal to 0.0001% by weight but less than or equal to 0.5% by weight.

9. The refrigerant compressor according to any one of claims 1 to 8, wherein
the refrigerating machine oil has a viscosity at 40°C set to a value within a range of less than or equal to 100 mm²/s.

10. The refrigerant compressor according to claim 9, wherein
the refrigerating machine oil has a viscosity at 40°C set to a value within a range of less than or equal to 4.9 mm²/s.

11. The refrigerant compressor according to any one of claims 1 to 10, wherein
the refrigerating machine oil has a viscosity at 120°C set to a value within a range of less than or equal to 10.0 mm²/s.

12. The refrigerant compressor according to any one of claims 1 to 11, wherein
the refrigerant gas contains a natural refrigerant.

13. The refrigerant compressor according to claim 12, wherein
the natural refrigerant is at least R600a, R290, or R744, or is a mixed refrigerant containing two of more of R600a, R290, and R744.

14. The refrigerant compressor according to any one of claims 1 to 11, wherein
the refrigerant gas contains a HFC-based refrigerant.

15. The refrigerant compressor according to claim 14, wherein
the HFC-based refrigerant is at least R134a, 152a, R407c, R404A, R410A, or R32, or is a mixed refrigerant containing two or more of R134a, 152a, R407c, R404A, R410A, and R32.

16. The refrigerant compressor according to any one of claims 1 to 11, wherein
the refrigerant gas is a HFO-based refrigerant or a mixed refrigerant containing the HFO-based refrigerant.

17. The refrigerant compressor according to claim 16, wherein
the HFO-based refrigerant has a molecular structure containing a double bond and two carbon atoms.

18. The refrigerant compressor according to any one of claims 1 to 17, wherein
the refrigerating machine oil contains at least one of mineral oil, ester oil, alkylbenzene oil, polyvinyl ether, and polyalkylene glycol.

19. The refrigerant compressor according to any one of claims 1 to 18, wherein the electric element is inverter-driven at a plurality of operating frequencies.

20. Equipment comprising a refrigerant circuit including:
the refrigerant compressor according to any one of claims 1 to 19;
a radiator that radiates heat of a refrigerant;
a decompressor that decompresses the refrigerant; and
a heat absorber that absorbs the heat of the refrigerant, wherein
in the refrigerant circuit, the refrigerant compressor, the radiator, the decompressor, and the heat absorber are connected by piping in an annular manner.
